# DEMANDE DE BREVET EUROPEEN

(11) **EP 1 411 468 A1**
(43) Date de publication de la demande: **21.04.2004**
(21) Numéro de dépôt: 03356148.1
(22) Date de dépôt: 13.10.2003
(51) Int. Cl.: G06K 19/077

(54) **Dispositif pour le contrôle à distance d'un code**

(30) Priorité: 14.10.2002 FR 0212727
(71) Demandeur: Simonin, Yves, 69006 Lyon (FR)
(72) Inventeur: Simonin, Yves, 69006 Lyon (FR)
(74) Mandataire: Myon, Gérard

(57) **Abrégé**

Ce dispositif comprend :
- une puce électronique (2) pourvue d'une mémoire (8) de stockage du code,
- une antenne (3) connectée à la puce électronique (2) et permettant de communiquer par voie hertzienne avec cette puce électronique (2), et
- un support auquel sont fixés la puce électronique (2) et l'antenne (3).

Le support comporte une bande souple (4) et des moyens (7) pour assembler une première et une deuxième extrémité de cette bande souple (4) afin de former avec cette dernière une boucle fermée de montage pouvant être rompue pour le retrait du dispositif.

## Description

La présente invention concerne un dispositif pour le contrôle à distance d'un code.

Un tel dispositif connu comporte une puce électronique et une antenne connectée à cette puce. La puce électronique et l'antenne sont unis à une carte rigide, qui a les dimensions d'une carte de crédit et qui est réalisée en matière plastique surmoulée sur cette puce et sur cette antenne. La puce électronique possède une mémoire de stockage du code à contrôler tandis que l'antenne permet l'établissement d'une communication par voie hertzienne entre cette puce et un appareil de contrôle. Pour envoyer des signaux à destination de l'émetteur-récepteur de cet appareil de contrôle, la puce électronique utilise une partie de l'énergie qu'elle a précédemment reçue de cet émetteur-récepteur. Cette technologie connue, qui concerne les transmissions hertziennes sans générateur depuis le réémetteur, est souvent désignée par le sigle R.F.ID (Radio Fréquence IDentification ou identification par fréquence radio) .

Le dispositif dont le principe de fonctionnement vient d'être exposé est utilisé, dans certaines stations de ski, pour vérifier que chaque skieur est effectivement autorisé à utiliser les remonte-pentes.

Ce dispositif permet l'automatisation du contrôle à l'entrée des remonte-pentes et accroît le confort des skieurs, lesquels n'ont pas à sortir de leur poche puis à exhiber un forfait ou un ticket. Cependant, il présente l'inconvénient de ne pas constituer une parade absolue aux tentatives de fraude.

L'invention a donc au moins pour but de faire obstacle à l'utilisation frauduleuse d'un dispositif pour le contrôle à distance.

A cet effet, l'invention a pour objet un dispositif pour le contrôle à distance d'un code par un appareil de contrôle, ce dispositif comprenant :
- une puce électronique pourvue d'une mémoire de stockage du code,
- une antenne connectée à la puce électronique et permettant de communiquer par voie hertzienne avec cette puce électronique, et
- un support auquel sont fixés la puce électronique et l'antenne,
caractérisé en ce que le support comporte une bande souple et des moyens pour assembler une première et une deuxième extrémité de cette bande souple afin de former avec cette dernière une boucle fermée de montage pouvant être rompue pour le retrait du dispositif.

D'autres caractéristiques avantageuses de ce dispositif pour le contrôle à distance sont définies par les revendications 2 à 10 annexées.

L'invention sera bien comprise à la lecture de la description qui va suivre, donnée uniquement à titre d'exemple et faite en se référant aux dessins annexés, sur lesquels :
- la figure 1 est une vue partiellement éclatée, en perspective, d'un dispositif conforme à l'invention et prévu pour permettre le contrôle à distance d'un code par un appareil de contrôle ;
- la figure 2 est une vue en perspective du dispositif de la figure 1 ;
- la figure 3 est une vue en plan d'une portion agrandie d'un sous-ensemble constitutif du dispositif des figures 1 et 2 ;
- la figure 4 est une vue en plan d'un ruban qui est muni d'éléments constitutifs du dispositif des figures 1 et 2 et dans lequel sont destinés à être découpés plusieurs exemplaires d'une bande faisant partie de ce dispositif des figures 1 et 2 ;
- les figures 5 à 7 sont des vues en perspective illustrant des étapes successives de la mise en place du dispositif des figures 1 et 2 autour d'un poignet ; et
- les figures 8 à 10 sont des vues en perspectives illustrant des étapes successives à effectuer au moment où l'on retire le dispositif des figures 1 et 2 du poignet.

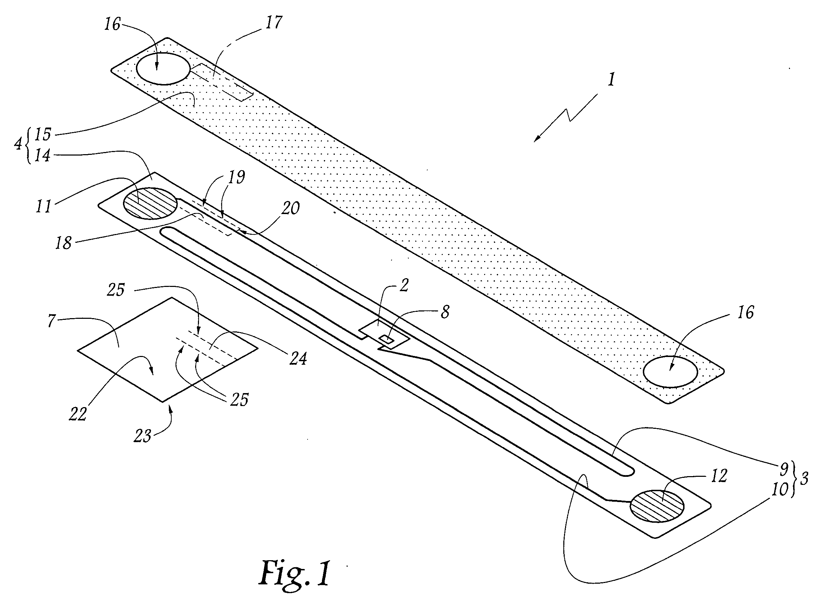

Sur la figure 1, il est représenté un dispositif 1 pour le contrôle à distance d'un code, tel qu'un code d'identification ou un code d'accès, par un appareil de contrôle non représenté. Ce dispositif de contrôle 1 comporte une puce électronique 2 et une antenne 3, qui sont fixées à une bande souple 4 formant support. Les extrémités opposées 5 et 6 de la bande 4 sont destinées à être assemblées l'une à l'autre au moyen d'une feuille adhésive 7.

La puce électronique 2 est pourvue d'une mémoire non réinscriptible 8 de stockage du code à contrôler. Le fonctionnement de la puce électronique 2 et celui de l'ensemble formé par cette puce 2 et par l'antenne 3 sont connus en eux-mêmes.

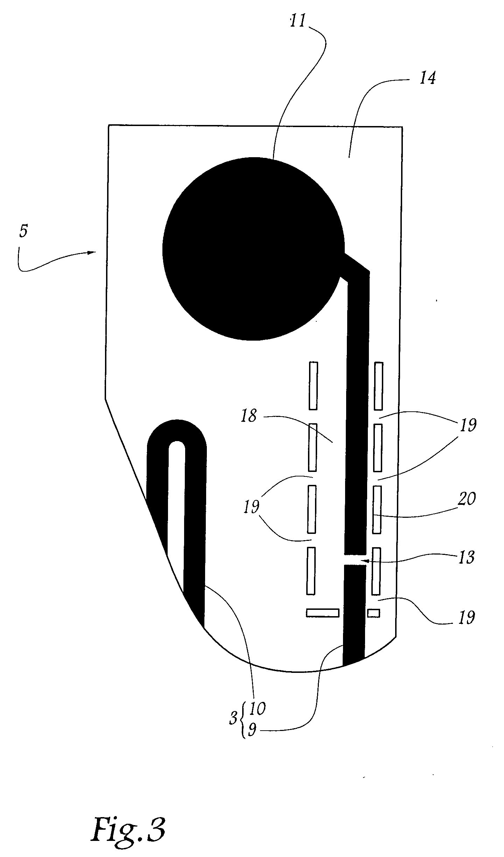

L'antenne 3 comporte deux tronçons 9 et 10, dont chacun est constitué par un brin métallique, par exemple de cuivre. L'une et l'autre extrémités du tronçon 9 sont respectivement connectées à la puce électronique 2 et à une borne de connexion 11. L'une et l'autre extrémités du tronçon 10 sont respectivement connectées à la puce électronique 2 et à une borne de connexion 12. Comme on peut le voir à la figure 3, une discontinuité du brin constituant le tronçon 9 forme un condensateur 13 équipant l'antenne 3.

La bande 4 résulte de l'assemblage par collage d'une feuille 14, destinée à être extérieure, et d'une feuille adhésive 15, destinée à être intérieure, cet assemblage étant effectué de telle manière que les bords respectifs de ces feuilles 14 et 15 coïncident.

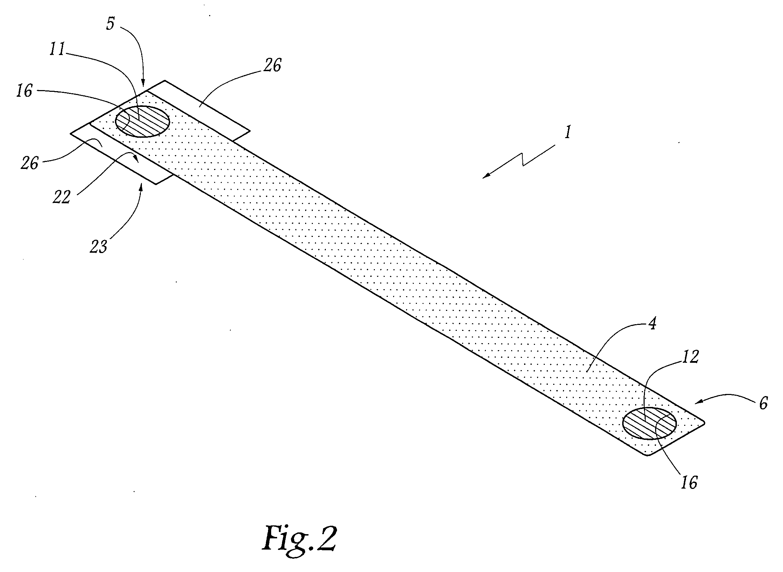

Un premier et un deuxième trou opposés 16 sont ménagés dans la feuille adhésive 15 et sont respectivement disposés à l'une et à l'autre extrémité de cette feuille 15. Une fois que les feuilles 14 et 15 sont assemblées, comme cela est représenté à la figure 2, chaque trou 16 se trouve au niveau d'une borne de connexion 11 ou 12 et découvre cette dernière.

L'adhésif qui recouvre une face de la feuille 15 et permet la fixation de cette dernière sur la feuille 14 est neutralisé, c'est-à-dire rendu inopérant pour réaliser une fixation, au niveau d'une zone rectangulaire 17, par application d'un vernis.

Une languette 18, découpée dans la feuille 14, est reliée par des pontets frangibles 19 au reste de cette feuille 14. La zone 17 et la languette 18 sont disposées de manière à se trouver au même niveau après que les feuilles 14 et 15 ont été collées l'une sur l'autre. De la sorte, après l'assemblage de ces feuilles 14 et 15, la languette 18 n'est pas fixée à la feuille adhésive 15, alors que la portion de la feuille 14 qui entoure cette languette 18 l'est. Le condensateur 13 est disposé à proximité du bord 20 de la languette 18.

La feuille 14 est une bande rectangulaire de Tyvek (marque déposée) ou d'un autre papier possédant également une résistance mécanique, en particulier au déchirement, supérieure à celle d'un papier standard.

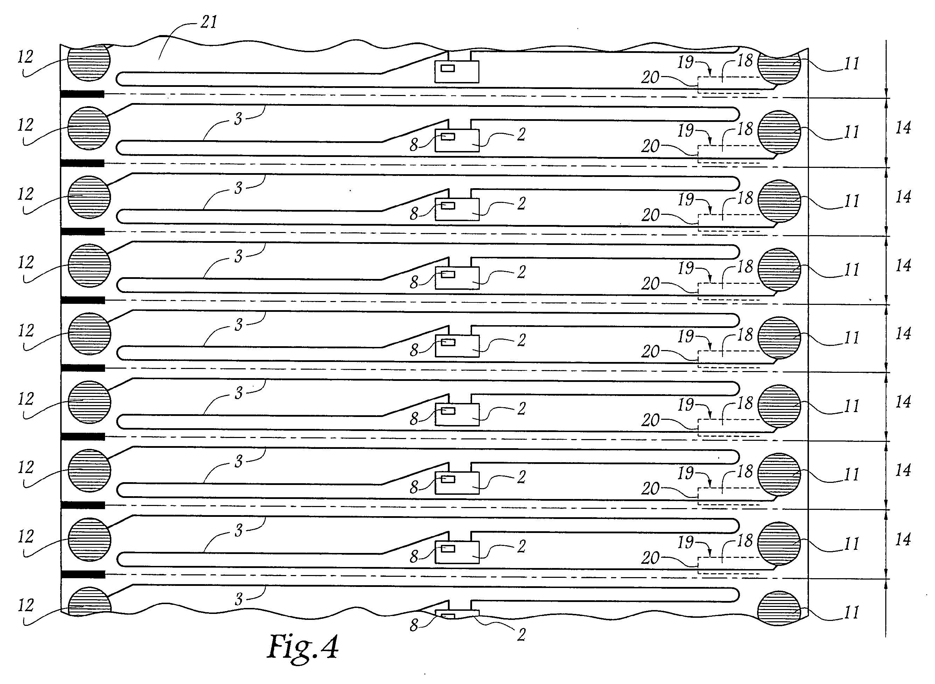

Sur la figure 4, plusieurs puces électroniques 2, plusieurs antennes 3 et plusieurs bornes de connexion 11 et 12 ont été fixées par collage sur un ruban 21 de Tyvek. Plusieurs feuilles 14 sont destinées à être découpées dans la largeur du ruban 21, c'est-à-dire de manière que leur longueur soit disposée selon la largeur de ce ruban 21.

La feuille adhésive 7 est une bande rectangulaire de papier. L'une, référencée 22, de ses deux faces opposées est revêtue d'un adhésif permanent, qu'un film siliconé non représenté isole de l'air ambiant jusqu'à son retrait pour permettre le collage de la feuille adhésive 7 sur la feuille 14. L'autre face 23 de la feuille adhésive 7 est colorée et sa teinte, qui peut avantageusement être une couleur fluorescente, est superficielle, ce qui signifie qu'elle ne pénètre pas profondément dans le papier de la feuille adhésive 7. Une languette 24, semblable à la languette 18, est découpée dans cette feuille adhésive 7, de manière à s'étendre à partir d'un bord longitudinal de celle-ci. Elle est reliée par des pontets frangibles 25 à la portion de la feuille adhésive 7 qui l'entoure.

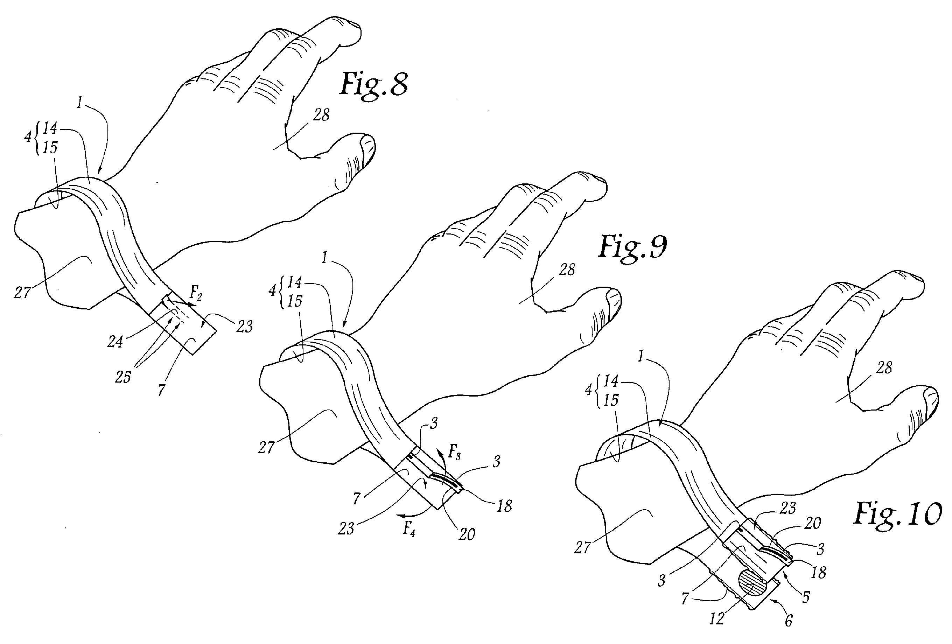

Des repères 26 et 27, visibles aux figures 8 à 10, sont prévus sur la feuille 14 et la feuille adhésive 15. Ils sont destinés à être attenants et servent à placer la feuille adhésive 7 et la bande 4 dans une position relative prédéterminée, lors du collage suite auquel cette feuille adhésive 7 et cette bande 4 sont fixées l'une à l'autre et sont telles qu'illustrées à la figure 2. Dans cette position relative prédéterminée, la languette 18 est recouverte par la languette 24, à laquelle elle est fixée, et la feuille adhésive 7 dépasse de chaque côté de la bande 4, au-delà de laquelle elle se termine par deux pattes de fixation 26.

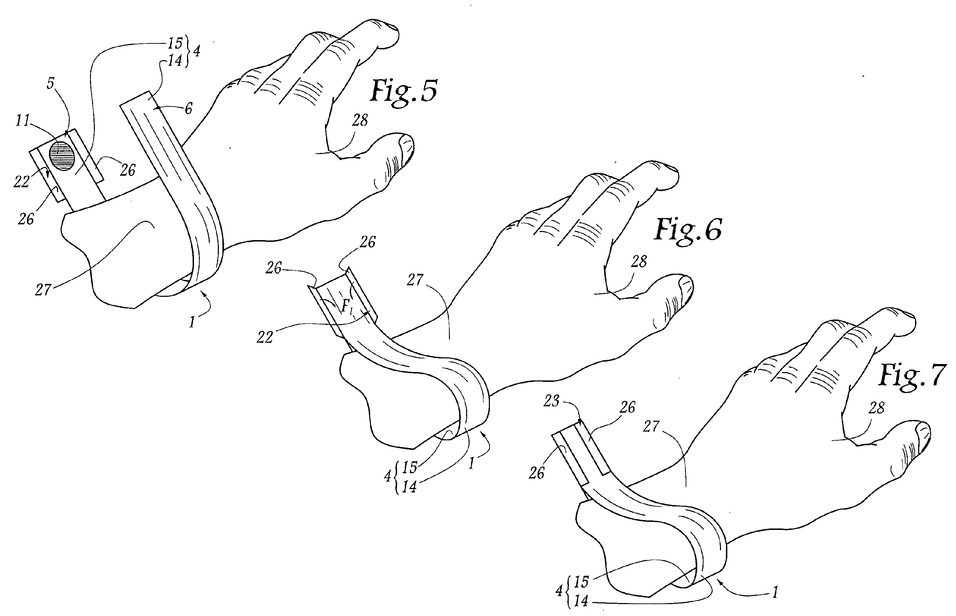

Les figures 5 à 7 illustrent l'installation d'un dispositif 1 autour du poignet 27 d'une personne, tel qu'un skieur à qui ce dispositif 1 va permettre d'accéder à des remonte-pentes. Une fois que le dispositif 1 est tel qu'à la figure 2, on passe ce dispositif 1 autour du poignet 27, ce qu'illustre la figure 5. Ensuite, on applique les extrémités 5 et 6 de la bande 4 l'une sur l'autre, de telle manière que les bornes 11 et 12 soient en contact et donc connectées électriquement l'une à l'autre, après quoi l'antenne 3 forme une spire. On rabat alors et on colle les pattes de fixation 26 sur l'extrémité 6 de la bande 4, ce que symbolisent les flèches F₁ à la figure 6.

Après cela, le dispositif 1 est installé et il est tel qu'illustré à la figure 7. La feuille adhésive 7 entoure partiellement les extrémités 6 et 7 et unit ces dernières l'une à l'autre. La bande 4 forme un bracelet dont la section de passage est telle qu'il ne peut pas être retiré en étant coulissé le long de la main 28 qui prolonge le poignet 27. Cela implique que ce bracelet doit être rompu pour être ôté, ce qui constitue un obstacle à une réutilisation frauduleuse du dispositif 1. De plus, ce dernier ne risque guère d'être perdu après avoir été placé autour du poignet 27.

Par ailleurs, la position du dispositif 1 au niveau d'un des poignets du skieur favorise l'établissement de la communication requise entre ce dispositif 1 et l'appareil de contrôle.

Lors du retrait du dispositif 1, on saisit une extrémité de la languette 24, sur laquelle on exerce une traction symbolisée par la flèche F₂ à la figure 8. Cette traction F₂ rompt les pontets frangibles 25 et les pontets frangibles 19, puisque la languette 18 est fixée à la languette 24, alors qu'elle n'est pas collée à la feuille adhésive 15. La portion de l'antenne 3 qui est fixée à la languette 18 accompagne cette dernière lors de la rupture des pontets frangibles 19. Il s'ensuit que la spire que formait l'antenne 3 est rompue au niveau du condensateur 13, de sorte que cette antenne 3 est hors service. Cela constitue un autre obstacle à une réutilisation frauduleuse du dispositif 1.

Lorsque les languettes 18 et 24 ont été partiellement détachées, le dispositif 1 est tel qu'illustré à la figure 9. On disjoint alors les extrémités 5 et 6 en exerçant sur ces dernières deux tractions F₃ et F₄ de sens opposés, qui conduisent au déchirement de la feuille adhésive 7 et à une deuxième rupture de la spire que formait l'antenne 3. Lorsque le bracelet formé par la bande 4 est rompu (figure 10), le dispositif 1 peut être retiré du poignet 27. Les déchirures de la feuille adhésive 7 au niveau des pontets 25 et des bords latéraux de la bande 4 sont particulièrement visibles du fait du contraste de couleur entre la face colorée 23 de la feuille adhésive 7 et le reste de cette feuille adhésive 7, ce qui facilite le dépistage par un contrôle visuel de certaines tentatives de fraude.

Le dispositif 1 présente l'avantage d'être peu coûteux du fait de la simplicité de sa fabrication et en raison du faible coût de ses éléments constitutifs, en particulier de la puce électronique 2, qui, étant munie d'une mémoire non réinscriptible 8, est bien moins chère que les puces électroniques à mémoire réinscriptible actuellement utilisées.

Le faible coût du dispositif 1 rend possible le fait que ce dispositif 1 soit destiné à ne servir qu'une seule fois. Comme il n'est pas conçu pour être réutilisé, le dispositif 1 n'a pas à être rapporté à l'exploitant du domaine skiable pour être déconsigné après usage, comme c'est actuellement le cas dans les stations de ski dotées d'appareils de contrôle à distance.

L'invention ne se limite pas au mode de réalisation décrit précédemment. En particulier, le code mémorisé par la puce électronique 2 peut ne pas être un code d'accès. Par exemple, ce peut être un code d'identification d'un concurrent d'une épreuve sportive, dans laquelle le passage de ce concurrent à divers points situés le long d'un trajet à parcourir est contrôlé à l'aide d'un dispositif 1.

De plus, tout ou partie de chaque tronçon 9 ou 10 de l'antenne 3 peut ne pas être constitué par un brin métallique, mais, par exemple, être constitué par une ligne imprimée avec une encre appropriée.

L'invention n'est pas limitée au contrôle dans le domaine du ski mais peut être utilisée dans divers domaines, tels que le domaine médical (suivi automatisé de patients hospitalisés) ou le domaine industriel (suivi automatisé de pièces dans une production.

Ainsi, le dispositif 1 peut être prévu pour équiper non pas une personne mais un objet tel qu'une valise, autour de la poignée duquel la bande 4 est montée par exemple lorsque cette valise est enregistrée avant d'être embarquée dans un avion.

De plus, un exemplaire du dispositif 1 peut être envoyé par courrier à chacune des personnes se présentant à un concours ou à chacune des personnes invitées à une réception, à l'entrée de laquelle un appareil de contrôle à distance vérifiera la validité des invitations.

## Revendications

1. Dispositif pour le contrôle à distance d'un code par un appareil de contrôle, ce dispositif comprenant :
- une puce électronique (2) pourvue d'une mémoire (8) de stockage du code,
- une antenne (3) connectée à la puce électronique (2) et permettant de communiquer par voie hertzienne avec cette puce électronique (2), et
- un support auquel sont fixées la puce électronique (2) et l'antenne (3),
**caractérisé en ce que** le support comporte une bande souple (4) et des moyens (7) pour assembler une première (5) et une deuxième extrémité (6) de cette bande souple (4) afin de former avec cette dernière une boucle fermée de montage pouvant être rompue pour le retrait du dispositif.

2. Dispositif selon la revendication 1, **caractérisé en ce que** la bande souple (4) est pourvue de moyens (11, 12 ; 13, 18, 19, 24, 25) pour rompre l'antenne (3) lors du retrait du dispositif.

3. Dispositif selon la revendication 1 ou 2, **caractérisé en ce que** l'antenne (3) comporte un premier (9) et un deuxième tronçon (10), une première et une deuxième extrémité du premier tronçon (9) étant respectivement connectés à la puce électronique (2) et à une première borne de connexion (11), une première et une deuxième extrémité du deuxième tronçon (10) étant respectivement connectés à la puce électronique (3) et à une deuxième borne de connexion (12), la première (11) et la deuxième borne de connexion (12) étant respectivement disposés au niveau de la première (5) et de la deuxième extrémité (6) de la bande (4), de manière à être en contact électrique après assemblage des première et deuxième extrémités (5, 6) de la bande (4).

4. Dispositif selon les revendications 2 et 3, **caractérisé en ce que** lesdits moyens (7) pour assembler la première (5) et la deuxième extrémité (6) de la bande (4) sont frangibles, la première (11) et la deuxième borne de connexion (12) faisant partie des moyens pour rompre l'antenne (3).

5. Dispositif selon la revendication 3 ou 4, **caractérisé en ce que** lesdits moyens pour assembler la première et la deuxième extrémité de la bande comprennent une feuille adhésive (7) adaptée pour entourer au moins partiellement les première et deuxième extrémités (5, 6) de la bande (4) une fois que ces première et deuxième extrémités (5, 6) de la bande (4) ont été appliquées l'une contre l'autre.

6. Dispositif selon la revendication 2 ou 4, **caractérisé en ce que** l'antenne comporte un brin métallique, ainsi qu'un condensateur (13) qui est placé de manière à former une discontinuité de ce brin métallique et au niveau duquel l'antenne (3) peut être rompue à l'aide des moyens (18, 19, 24, 25) pour rompre cette antenne (3).

7. Dispositif selon l'une quelconque des revendications précédentes, **caractérisé en ce que** la bande (4) comporte des première et deuxième feuilles (14, 15) qui sont collées l'une sur l'autre et entre lesquelles se trouve l'antenne (3) et la puce électronique (2).

8. Dispositif selon les revendications 6 et 7, **caractérisé en ce que** lesdits moyens pour rompre l'antenne (3) comprennent une languette (18) découpée dans une portion de la première feuille (14) et reliée à cette portion par des moyens frangibles (19), les première et deuxième feuilles (14, 15) n'étant pas collées l'une sur l'autre au niveau de cette languette (18) à laquelle est fixé le brin métallique et au niveau ou dans le voisinage immédiat duquel se trouve le condensateur (13).

9. Dispositif selon les revendications 5 et 8, **caractérisé en ce que**, sur ladite languette (18), est collée une autre languette (24) qui est découpée dans une portion de la feuille adhésive (7), qui est reliée à cette portion de la feuille adhésive (7) par d'autres moyens frangibles (25) et qui est prévue pour exercer une traction menant à la rupture des uns et des autres moyens frangibles (19, 25).

10. Dispositif selon l'une quelconque des revendications précédentes, **caractérisé en ce que** la mémoire (8) de la puce électronique (2) est non réinscriptible
